# EUROPEAN PATENT APPLICATION

(11) **EP 4 723 408 A1**
(43) Date of publication of application: **08.04.2026**
(21) Application number: 24204327.1
(22) Date of filing: 02.10.2024
(51) Int. Cl.: H02G 5/06, H02B 13/035

(54) **INSULATOR ASSEMBLY FOR A HIGH OR MEDIUM VOLTAGE DEVICE, AND HIGH OR MEDIUM VOLTAGE DEVICE**

(71) Applicant: Hitachi Energy Ltd, 8050 Zürich (CH)
(72) Inventor: Calamari, Matteo, 29020 Vigolzone (IT); Mingiardi, Roberto, 20141 Milano (IT); Fattorini, Lorenzo, 20137 Milano (IT)
(74) Representative: Michalski Hüttermann & Partner Patentanwälte mbB

(57) **Abstract**

The invention relates to an insulator assembly (12) for a high or medium voltage device comprising:
an insulator (16), the insulator (16) being attached to an enclosure (10) of the high or medium voltage device at an outer rim of the insulator (16), the insulator (16) further being configured to accommodate a conductor (18) within a device volume (14) enclosed by the enclosure (10), and
a particle shield (22) arranged within the device volume (14), the particle shield (22) being connected to the enclosure (10), and wherein the particle shield (22) at least in part extends parallel to an axial direction (24) of the conductor (18) accommodated by the insulator (16) and circumferentially along the connection of the insulator (16) to the enclosure (10).

Furthermore, the invention relates to high or medium voltage device comprising the above insulator assembly (12).

## Description

### Technical Field

The invention relates to an insulator assembly for a high or medium voltage device.

The present invention also relates to a high or medium voltage device comprising the above insulator assembly.

### Background Art

High or medium voltage devices, such as circuit breakers and switchgears are essential for the protection of technical equipment, especially in the high voltage range. For example, circuit breakers are predominantly used for interrupting a current, when an electrical fault occurs. As an example, circuit breakers have the task of opening arcing contacts, quench an arc, and keeping the arcing contacts apart from one another in order to avoid a current flow even in case of high electrical potential originating from the electrical fault itself. Circuit breakers, may break medium to high short circuit currents of typically 1 kA to 80 kA at medium to high voltages of 12 kV to 72 kV and up to 1200 kV. Thus, high or medium voltage devices accommodate high-voltage conductors such as lead conductors to which a high voltage is applied.

In order to hold the high-voltage conductor firmly inside the device volume, in a position sufficiently far away from the grounded enclosure, an insulator is provided inside the gas enclosure. The insulator may be secured at its outer rim to the enclosure, and may be configured to accommodate the high-voltage conductor within the enclosure. The insulator may be configured to be firmly attached to the enclosure, for example by a flange. In case the insulator is used to separate different gas compartments of the high or medium voltage device, a sealing mean, such as an O-ring may be provided within a sealing groove of the insulator to prevent leakage of an insulation gas for gas-insulated high or medium voltage devices at the connection of the insulator and the enclosure. The sealing means enable the insulator to keep required pressure between compartments of the gas-insulated high or medium voltage device and to avoid insulation gas leakage to the environment.

The insulator provides a mechanical connection of the high-voltage conductor to the grounded enclosure, but its dielectric performances ensures that no electrical connection between the conductor and the enclosure takes place. However, during operation of the high or medium voltage device particles from moving components of the high or medium voltage devices might be generated. These particles can worsen the dielectric performance of the insulator and can increase the risk for flashovers.

### Summary of invention

It is an object of the invention to provide means to improve the reliability and safety and of high or medium voltage devices. It is further an object of the present invention to protect the insulator from particles.

The object of the invention is solved by the features of the independent claims. Modified embodiments are detailed in the dependent claims.

Thus, the object is solved by an insulator assembly for a high or medium voltage device comprising: an insulator, the insulator being attached to an enclosure of the high or medium voltage device at an outer rim of the insulator, the insulator further being configured to accommodate a conductor within a device volume enclosed by the enclosure, and a particle shield arranged within the device volume, the particle shield being connected to the enclosure, and wherein the particle shield at least in part extends parallel to an axial direction of the conductor accommodated by the insulator and circumferentially along the connection of the insulator to the enclosure.

Furthermore, the object is solved by a high or medium voltage device comprising the above insulator assembly.

One aspect of the invention is that the particle shield is arranged within the device volume defined by the enclosure. The particle shield thus protects the insulator from particles being generated by the operation of the high or medium voltage device in the device volume. As the particles shield prevents that the particles can settle down on the insulator, the dielectric properties of the insulator are not negatively affected and the reliability and safety of the high or medium voltage device is improved. As the particle shield at least in part extends parallel to the axial direction of the conductor accommodated by the insulator and circumferentially along the connection of the insulator to the enclosure it ensures that particles are trapped in the space between the enclosure and the particles shield, and in particular all around the circumference of the particle shield itself.

According to a preferred embodiment of the invention, the insulator comprises a conductive insert, wherein the conductive insert is arranged in the central opening of the insulator. Thus, the insulator can easily accommodate the conductor.

According to a preferred embodiment of the invention, the insulator has a circular form. The insulator preferably has a first face and a second face, wherein the first face and second face are opposite to each other. Further preferably the first face and second face are connected to each other by at least one lateral face.

According to another preferred embodiment of the invention, the insulator has a circular form and a sealing groove extends circumferentially along the rim of the insulator. The sealing groove preferably ensures a gas tight sealing of the connection of the insulator and the enclosure. Insulators that are used to separate different gas compartments of the high or medium voltage device from each other are generally called partition insulator. In other words, in this preferred embodiment the insulator is preferably configured as partition insulator. The sealing groove can be arranged within the lateral face. Alternatively, the sealing groove is preferably arranged in the first and/or second face. Further preferably the first face and the second face of the insulator each comprise a sealing groove.

According to an alternative embodiment of the invention, the insulator has a circular form and is free of a sealing groove extending circumferentially along the rim of the insulator. Insulators that are purely used to provide mechanical support are generally called support insulators. For such insulators there is no need to provide a sealing means at the connection of the insulator to the enclosure. In other words, in this preferred alternative embodiment the insulator is preferably configured as support insulator.

The insulator can comprise reinforcement ribs for increasing the mechanical stability of the insulator. The ribs can be configured to have different arrangement/patterns. Preferably the ribs extend at least partially in a radial direction. For example, a rib starts at a rim of the central opening and extends radially outwards and ends at an outer rim of the insulator. Furthermore, the insulator can comprise openings. This has the advantage that less material can be used.

The insulator can be configured as a disc type insulator. Alternatively, the insulator can be configured as a conical type insulator - also called basin type insulator. The insulator is particular suited for a gas-insulated high or medium voltage devices. Preferably, the insulator enables that a conductor of the high or medium voltage device is firmly located inside the device, in a position sufficiently far away from the grounded enclosure of the device. The conductive insert of the insulator is preferably configured to provide electrical connection to the conductor of the high or medium voltage device. Furthermore, the volume enclosed by the enclosure of the high or medium voltage device may be divided into several compartments by the insulator. Further preferably the insulator may be configured to keep a required pressure between compartments of a gas-insulated high or medium voltage device and to avoid insulation gas leakage to the environment.

According to another preferred embodiment of the invention, the conductor accommodated by the insulator provides a cable connection to the high or medium voltage device. As insulator for cable connections are preferably arranged on a bottom side of the high or medium voltage device, these insulators are particularly exposed to particles generated during the operation of the high or medium voltage device. Due to the particle shield the particles are trapped in a dielectrically safe space between the enclosure and the part of the particles shield that extends parallel to the axial direction of the conductor.

According to another preferred embodiment of the invention, the insulator is connected to the enclosure such that the axial direction of the conductor is parallel ± 45 degrees to the direction of gravity. In other words, the insulator is essentially horizontally arranged. This makes the connection of the insulator to the high or medium voltage device particular easy to maintain as a good access can be provided.

According to another preferred embodiment of the invention, the enclosure encloses an interrupter unit of the high or medium voltage device. Preferably, the enclosure is a grounded enclosure. The interrupter unit preferably ensures that the high or medium voltage device can interrupt a current e.g. when an electrical fault occurs. The interrupter unit preferably has the task of opening arcing contacts, quench an arc, and keeping the arcing contacts apart from one another in order to avoid a current flow even in case of high electrical potential originating from the electrical fault itself. It is preferred that the interrupter unit comprises a first arcing contact and a second arcing contact, wherein at least one of the arcing contacts is axially movable along a switching axis. Further preferably the interrupter unit comprise a heating channel for guiding an insulation gas from a heating volume to an arcing region formed between the first arcing contact and the second arcing contact. Due to the movement of parts of the interrupter unit during operation of the high or medium voltage device particles that can settle on the insulator can be generated.

In this regard and according to another preferred embodiment of the invention, the insulator is with regard to the direction of gravity arranged below the interrupter unit. In particular in case the conductor accommodated by the insulator provides a cable connection to the high or medium voltage device, this allows for an easy access. Even though this arrangement of the insulator facilitates that particles generated during the operation of the interrupter unit settle on the insulator, the particle shield trapes the generated particles in the dielectric safe space preferably in the space between the enclosure and the part of the particle shield that extends at least in part parallel to the axial direction of the conductor. Thus, the particle shield protects the insulator from the particles.

As already mentioned, the particle shield is connected to the enclosure. In this regard and according to another preferred embodiment of the invention, the particle shield comprises a connection surface, the connection surface being in contact with the enclosure and wherein the connection surface lies within a plane having the axial direction of the conductor as normal vector. In other words, the connection surface is preferably a flat plane. This simplifies the connection of the particles shield to the enclosure.

According to another preferred embodiment of the invention, the particle shield is connected to the enclosure by screws. This is a particular maintenance friendly way to attach the particle shield to the enclosure. In this regard it is further preferred that the connection surface of the particles shieled comprises openings and further preferably through holes for the screws. Further preferably the enclosure where the insulator is attached comprises blind hole for the screws.

According to another preferred embodiment of the invention, the particle shield is a one-piece component. This has the advantage that the particles shield is robust. It has further the advantage that the overall dielectric field does not show strong local inhomogeneities. Additionally, assembly of the particle shield is simplified as only one component needs to be attached and preferably screwed to the enclosure.

According to another preferred embodiment of the invention a shape of the particle shield corresponds essentially to a body of revolution preferably of an L-form. Particularly preferably the particle shield has a first section with the connection surface and a second section with the part that extends parallel to the axial direction of the conductor accommodated by the insulator, wherein the first section and second section are arranged orthogonal to each other. Further preferably, the first section has the shape of an annulus, and the second section has the shape of a circular cylinder, preferably a right circular cylinder.

According to another preferred embodiment of the invention, an assembly is provided wherein the part of the particle shield that extends in the axial direction of the conductor ends in a region of the enclosure, where the enclosure comprises a curvature. Preferably, the enclosure comprises a bottom side which is provided with a flange. As the flange preferably protrudes from the external surface of the enclosure, the insulator is not arranged on the same height as the bottom side of the enclosure, but a bit lower and the enclosure comprises a region with a curvature between the bottom side and the flange.

According to another preferred embodiment of the invention, the particle shield is configured such that a shortest distance from the particle shield to the conductor accommodated by the insulator is constant for different locations around the rim of the insulator. This has advantages for the insulation properties of the insulator.

According to another preferred embodiment of the invention, a rim of the part of the particle shield that extends in the axial direction of the conductor comprises a bulge. Preferably, the bulge is oriented such that the dielectric field is optimized. In a preferred embodiment the bulge is oriented towards the conductor accommodated by the insulator. In an alternative preferred embodiment the bulge is oriented facing away from the conductor.

Further embodiments and advantages of the insulator assembly are directly and unambiguously derived by the person skilled in the art from the description of the high or medium voltage device and the detailed description of the embodiment.

The invention is also directed to a high or medium voltage device comprising the above-described insulator assembly. Preferably the high or medium voltage device is a gas-insulated high or medium voltage device. Preferably, medium to high voltages means voltages of 12 kV to 72 kV (medium voltage) and up to 1200 kV (high voltage).

According to another preferred embodiment of the invention the high or medium voltage device is preferably a circuit breaker or a switch gear. Further preferably the high or medium voltage device is configured as a puffer-type circuit breaker, a self-blast circuit breaker, or a combined puffer-type and self-blast circuit breaker.

According to another preferred embodiment of the invention the high or medium voltage device comprises the enclosure configured to contain an insulation gas within the device volume.

The insulating gas of the high or medium voltage device preferably provides dielectric insulation and acts as arc extinction medium in the device. More preferably, the insulation gas comprises SF₆, mixtures of SF₆ with a carrier gas and/or mixtures of fluoroketons and/or fluoronitriles with a carrier gas. The carrier gas may comprise air, N₂, CO₂, and mixtures thereof. For example, the insulation gas comprises de-cafluoro-2-methylbutan-3-one (C5-FK), and/or heptafluoro-2-methylpropanenitrile (C4-FN). It is further possible that the insulation gas is CO₂, or a mixture comprising CO₂, mixtures of CO₂ with the carrier gas and/or mixtures of fluoroketons and/or fluoronitriles with the carrier gas.

### Brief description of drawings

These and other aspects of the invention will be apparent from and elucidated with reference to the embodiments described hereinafter.

In the drawings:
- Fig. 1: schematically shows an enclosure of a gas-insulated switchgear comprising an insulator assembly according to a preferred embodiment of the invention;
- Fig. 2: schematically shows an enlarged detail of the insulator assembly of figure 1;
- Fig. 3: schematically shows an insulator assembly of a gas-insulated switchgear according to a further preferred embodiment of the invention;
- Fig. 4: schematically shows the insulator assembly of the gas-insulated switchgear from figure 3 from a different perspective;
- Fig. 5: schematically shows a detail of a cross section through the insulator assembly of the gas-insulated switchgear from figure 3.

### Description of embodiments

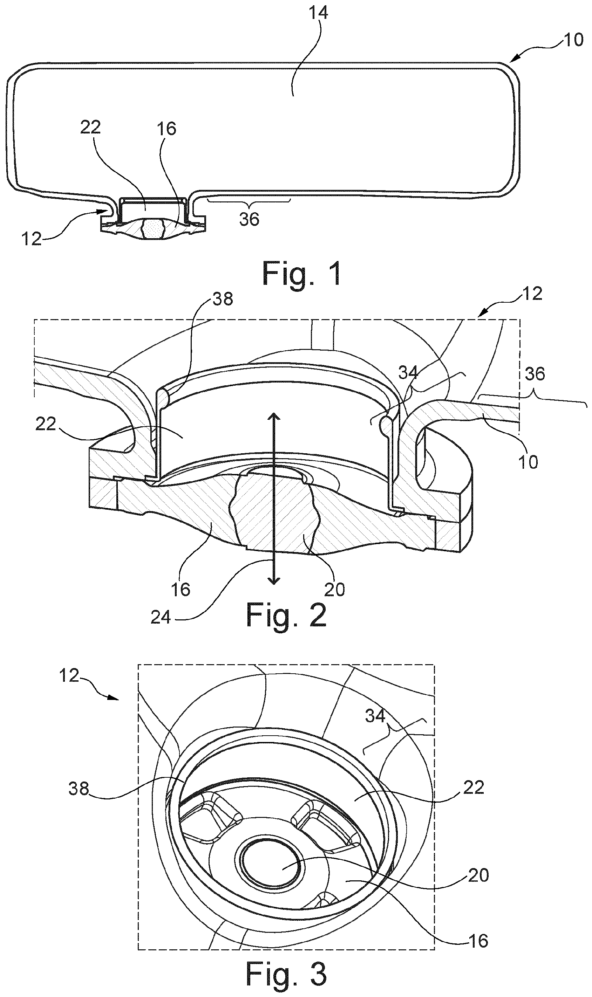

Fig. 1 schematically shows an enclosure 10 of a gas-insulated switchgear comprising an insulator assembly 12 according to a preferred embodiment of the invention.

As is shown in figure 1, the enclosure 10 of the switchgear encloses a device volume 14 and is configured to contain an insulation gas within the device volume 14. In this preferred embodiment the enclosure 10 encloses an interrupter unit (not shown in the figure) of the switchgear.

As seen in figures 1 and 2, which show different views of the insulator assembly 12, the insulator assembly 12 comprises an insulator 16, wherein the insulator 16 is attached to the enclosure 10 of the switchgear at an outer rim of the insulator 16. The insulator 16 is further being configured to accommodate a conductor 18 within the device volume 14. For this the insulator 16 comprises a conductive insert 20 arranged within a central opening of the insulator 16. In this embodiment the insulator is configured as partition insulator.

The insulator assembly 12 further comprise a particle shield 22 arranged within the device volume 14, the particle shield 22 being connected to the enclosure 10. The particle shield 22 extends at least in part parallel to an axial direction 24 of the conductor 18 accommodated by the insulator 16. Furthermore, the particle shield 22 extends circumferentially along the connection of the insulator 16 to the enclosure 10.

Figures 3 to 5 schematically show an insulator assembly 12 of a gas-insulated switchgear according to a further preferred embodiment of the invention. As seen in figures 3 to 5, which show different views of the insulator assembly 12, the insulator assembly 12 comprises an insulator 16, wherein the insulator 16 is attached to an enclosure 10 of the switchgear at an outer rim of the insulator 16. The insulator 16 is further being configured to accommodate a conductor 18 within a device volume 14. For this the insulator 16 comprises a conductive insert 20 arranged within a central opening of the insulator 16. In this embodiment the insulator 16 is configured as support insulator.

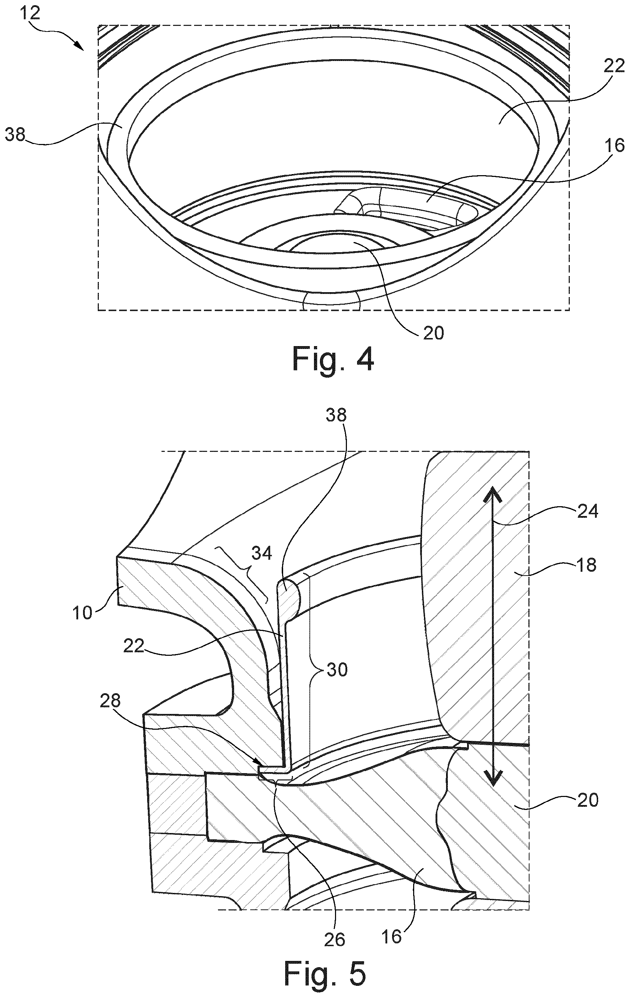

Regardless of whether the insulator 16 is configured as partition insulator or as support insulator, and as visible on the figures 1 to 5, the shape of the particle shield 22 corresponds essentially to a body of revolution of an L-form. As best seen on figure 5, the particle shield 22 has a first section 26 with a connection surface 28. The connection surface 28 is in contact with the enclosure 10 and lies within a plane having the axial direction 24 as normal vector. The particle shield 22 further has a second section 30 with the part that extends parallel to the axial direction 24. The first section 26 and second section 30 are arranged orthogonal to each other.

In the embodiments shown in figures 1 to 5 the particle shield is a one-piece component. The particle shield 22 is connected to the enclosure 10 by screws. The screws are arranged in the first section 26. The part of the particle shield 22 that extends in the axial direction 24 ends in a region 34 of the enclosure 10, where the enclosure 10 comprises a curvature.

In the embodiment shown in figures 1 and 2, the insulator assembly 12 is provided at a bottom flange of the enclosure 10. As best seen on figure 1, the bottom of the enclosure 10 comprises a flat region 36. As the bottom flange protrudes from the external surface of the enclosure 10, adjacent to the flat region 36 is a region 34 with a curvature. Furthermore, the part of the particle shield 22 that extends in the axial direction 24 ends at a height below the flat region 36. The insulator 16 is with regard to the direction of gravity arranged below the interrupter unit enclosed in the device volume 14. In this preferred embodiment of the invention, the conductor 18 accommodated by the insulator 12 provides a cable connection to the gas-insulated switchgear.

Furthermore, regardless of whether the insulator 16 is configured as partition insulator or as support insulator and as best seen in figures 2 and figure 5, the rim of the part of the particle shield 22 that extends in the axial direction 24 comprises a bulge 38 oriented towards the conductor 18 accommodated by the insulator 16.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosed, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 10: enclosure
- 12: insulator assembly
- 14: device volume
- 16: insulator
- 18: conductor
- 20: conductive insert
- 22: particle shield
- 24: axial direction
- 26: first section
- 28: connection surface
- 30: second section
- 34: region of enclosure with curvature
- 36: flat region of enclosure
- 38: bulge

## Claims

1. An insulator assembly (12) for a high or medium voltage device comprising:
an insulator (16), the insulator (16) being attached to an enclosure (10) of the high or medium voltage device at an outer rim of the insulator (16), the insulator (16) further being configured to accommodate a conductor (18) within a device volume (14) enclosed by the enclosure (10), and
a particle shield (22) arranged within the device volume (14), the particle shield (22) being connected to the enclosure (10), and wherein the particle shield (22) at least in part extends parallel to an axial direction (24) of the conductor (18) accommodated by the insulator (16) and circumferentially along the connection of the insulator (16) to the enclosure (10).

2. The insulator assembly (12) according to the previous claim wherein the insulator (16) comprises a conductive insert (20) arranged in a central opening of the insulator (16).

3. The insulator assembly (12) according to any of the previous claims wherein the insulator (16) has a circular form.

4. The insulator assembly (12) according to any of the previous claims, wherein the conductor (18) accommodated by the insulator (16) provides a cable connection to the high or medium voltage device.

5. The insulator assembly (12) according to any of the previous claims, wherein the insulator (16) is connected to the enclosure (10) such that the axial direction (24) of the conductor (18) is parallel ±45 degrees to the direction of gravity.

6. The insulator assembly (12) according to any of the previous claims, wherein the enclosure (10) encloses an interrupter unit of the high or medium voltage device.

7. The insulator assembly (12) according to the previous claim, wherein the insulator (16) is with regard to the direction of gravity arranged below the interrupter unit.

8. The insulator assembly (12) according to any of the previous claims, wherein the particle shield (22) comprises a connection surface (28), the connection surface (28) being in contact with the enclosure (10) and wherein the connection surface (28) lies within a plane having the axial direction (24) of the conductor (18) as normal vector.

9. The insulator assembly (12) according to any of the previous claims, wherein the particle shield (22) is connected to the enclosure (10) by screws.

10. The insulator assembly (12) according to any of the previous claims, wherein the particle shield (22) is a one-piece component.

11. The insulator assembly (12) according to any of the previous claims, wherein a shape of the particle shield (22) corresponds essentially to a body of revolution preferably of an L-form.

12. The insulator assembly (12) according to any of the previous claims, wherein the part (30) of the particle shield (22) that extends in the axial direction (24) of the conductor (18) ends in a region (34) of the enclosure (10), where the enclosure (10) comprises a curvature.

13. The insulator assembly (12) according to any of the previous claims, wherein a rim of the part (30) of the particle shield (22) that extends in the axial direction (24) of the conductor (18) comprises a bulge (38).

14. High or medium voltage device comprising an insulator assembly (12) according to any of the previous claims.

15. The high or medium voltage device according to the previous claim comprising an enclosure (10) configured to contain an insulation gas within the device volume (14).
